(19) Europäisches Patentamt / European Patent Office / Office européen des brevets

(11) **EP 3 353 404 B1**

(12) **FASCICULE DE BREVET EUROPEEN**

(45) Date de publication et mention de la délivrance du brevet:
**26.02.2025 Bulletin 2025/09**

(21) Numéro de dépôt: **16785224.3**

(22) Date de dépôt: **26.09.2016**

(51) Classification Internationale des Brevets (IPC):
*F02D 41/24* (2006.01)    *F02B 33/00* (2006.01)
*F02B 39/10* (2006.01)    *F02D 41/00* (2006.01)
*F02D 41/20* (2006.01)    *F01N 5/04* (2006.01)

(52) Classification Coopérative des Brevets (CPC):
**F02D 41/0007; F01N 5/04; F02B 33/00;
F02B 39/10; F02D 41/2438;** F01N 13/009;
F01N 2570/14; F02D 2041/2058; Y02T 10/12

(86) Numéro de dépôt international:
**PCT/FR2016/052429**

(87) Numéro de publication internationale:
**WO 2017/051139 (30.03.2017 Gazette 2017/13)**

(54) **MÉTHODE D'ÉLABORATION D'UNE CONSIGNE DE PILOTAGE D'UN COMPRESSEUR ÉLECTRIQUE**

VERFAHREN ZUR HERSTELLUNG EINER STEUERUNGSANWEISUNG EINES ELEKTRISCHEN VERDICHTERS

METHOD FOR PRODUCING A CONTROL INSTRUCTION OF AN ELECTRICAL COMPRESSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.09.2015 FR 1559031**

(43) Date de publication de la demande:
**01.08.2018 Bulletin 2018/31**

(73) Titulaire: **NEW H POWERTRAIN HOLDING, S.L.U.
47008 Valladolid (ES)**

(72) Inventeurs:
• **TALON, Vincent
69007 Lyon (FR)**
• **ANDRE, Sylvie
67295 Bolanden (DE)**

(74) Mandataire: **Renault Group
Renault s.a.s.
1 avenue du Golf
FR TCR AVA 055
78084 Guyancourt Cedex (FR)**

(56) Documents cités:
WO-A1-2006/087014    WO-A2-2014/170599
WO-A2-2015/011420    DE-A1- 10 124 543
DE-A1- 102006 000 075

**Description**

DOMAINE TECHNIQUE AUQUEL SE RAPPORTE L'INVENTION

La présente invention concerne de manière générale le traitement des émissions polluantes des moteurs à combustion interne.

Elle s'applique plus particulièrement à un groupe motopropulseur pour véhicule automobile, comportant un moteur à combustion interne qui comprend :

- un bloc moteur qui délimite des cylindres et qui est équipé d'un vilebrequin,
- une ligne d'admission d'air frais dans les cylindres,
- une ligne d'échappement de gaz brûlés hors des cylindres, qui comprend au moins un moyen de traitement des gaz brûlés,
- un turbocompresseur qui comprend une turbine montée dans la ligne d'échappement et un compresseur principal monté dans la ligne d'admission, et
- un compresseur électrique qui comporte une roue à aubes montée dans la ligne d'admission et un moteur électrique d'actionnement de la roue à aubes alimenté en courant par une batterie d'accumulateurs.

Elle concerne plus particulièrement une méthode d'élaboration d'une consigne de pilotage du compresseur électrique, comportant :

- une étape d'acquisition d'au moins un premier paramètre thermodynamique relatif au fonctionnement du moteur à combustion interne, et
- une étape de calcul d'une consigne préliminaire de pilotage du compresseur électrique, en fonction de chaque premier paramètre acquis.

ARRIERE-PLAN TECHNOLOGIQUE

On recherche actuellement, dans un cadre législatif toujours plus contraignant et dans un souci de préservation de l'environnement, des solutions techniques permettant de réduire le taux d'éléments polluants contenus dans les gaz brûlés émis par les moteurs à combustion interne dans l'atmosphère.

On souhaite également trouver des solutions qui permettent de préserver les prestations de ces moteurs (en termes de puissances et de couples disponibles).

Ce sont les raisons pour lesquelles on a récemment développé des groupes motopropulseurs du type de celui défini en introduction, comprenant non seulement un turbocompresseur mais également un compresseur électrique. Le document DE102006000075 propose par exemple un tel groupe.

Pour réduire ses émissions polluantes, un moteur à combustion interne comporte généralement dans sa ligne d'échappement des moyens de traitement des gaz brûlés. Il s'agit par exemple d'un catalyseur et/ou d'un piège à oxydes d'azote et/ou d'un filtre à particules.

Un piège à oxydes d'azote ou un filtre à particules est conçu pour se charger progressivement d'oxydes d'azote ou de particules fines.

L'accumulation d'oxydes d'azote réduit l'efficacité du piège et l'accumulation de particules fines entrave progressivement l'évacuation des gaz brûlés.

Il est alors connu de régénérer ces éléments en injectant du carburant dans la ligne d'échappement pour réduire les oxydes d'azote et pour augmenter la température des gaz brûlés, ce qui a pour effet de brûler les particules fines.

Cette régénération est généralement mise en oeuvre au besoin, en injectant à chaque cycle du moteur un surplus de carburant dans les cylindres, de manière à accroître le taux d'hydrocarbures imbrûlés contenus dans les gaz brûlés. Ce carburant peut ainsi venir réagir avec les oxydes d'azote retenus dans le piège. Cette réaction chimique est très exothermique, si bien que les gaz brûlés sortent du piège à une température très élevée, de l'ordre de 650°C, et entrent dans le filtre à particules en brûlant les particules fines qui encombrent ce dernier.

Cette méthode n'est pas complètement satisfaisante puisque, pour s'assurer que le moteur délivre le couple souhaité au cours de cette phase de régénération, on utilise le turbocompresseur afin d'augmenter la pression de l'air admis dans les cylindres. Pour faire fonctionner ce turbocompresseur, il est alors nécessaire d'utiliser la turbine et, par conséquent, de détendre les gaz brûlés. Cette détente a pour effet de réduire la température des gaz brûlés, ce qui va à l'encontre de l'augmentation de température recherchée.

C'est une des raisons pour lesquelles la ligne d'admission est équipée d'un compresseur électrique. L'actionnement de ce compresseur est en effet opéré sans l'aide des gaz brûlés, ce qui permet de conserver une température élevée des gaz brûlés et donc d'assurer une bonne régénération des moyens de traitement des gaz brûlés.

La demanderesse a toutefois constaté que la durée de vie d'un tel compresseur électrique était généralement inférieure à celle pour laquelle il avait été conçu.

OBJET DE L'INVENTION

Afin de remédier à l'inconvénient précité de l'état de la technique, la présente invention propose une méthode d'élaboration d'une consigne de pilotage du compresseur électrique telle que définie dans la revendication 1.

La demanderesse a observé qu'en règle générale, le niveau de contribution du compresseur électrique était calculé en fonction des seuls besoins du moteur à combustion interne, et non pas en fonction des conditions que le compresseur électrique peut supporter.

Alors, l'invention propose de déterminer un second paramètre (thermodynamique ou thermomécanique du compresseur électrique ou de durée d'utilisation, ou relatif au niveau de charge de la batterie d'accumulateurs) et de contrôler que, compte tenu de la valeur de ce second paramètre, le compresseur électrique est apte à supporter les conditions de fonctionnement requises.

D'autres caractéristiques avantageuses et non limitatives de la méthode d'élaboration conforme à l'invention sont définies dans les revendications 2 à 7.

L'invention propose également un groupe motopropulseur pour véhicule automobile tel que défini en revendication 8.

Avantageusement, le groupe motopropulseur comporte en outre une machine électrique qui est couplée au vilebrequin du moteur à combustion interne et qui est connectée à la batterie d'accumulateurs.

## DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique d'un moteur à combustion interne conforme à l'invention ; et
- la figure 2 est un graphique illustrant la plage d'utilisation d'un compresseur électrique équipant le moteur à combustion interne de la figure 1.

Dans la description, les termes « amont » et « aval » seront utilisés suivant le sens de l'écoulement des gaz, depuis le point de prélèvement de l'air frais dans l'atmosphère jusqu'à la sortie des gaz brûlés dans l'atmosphère.

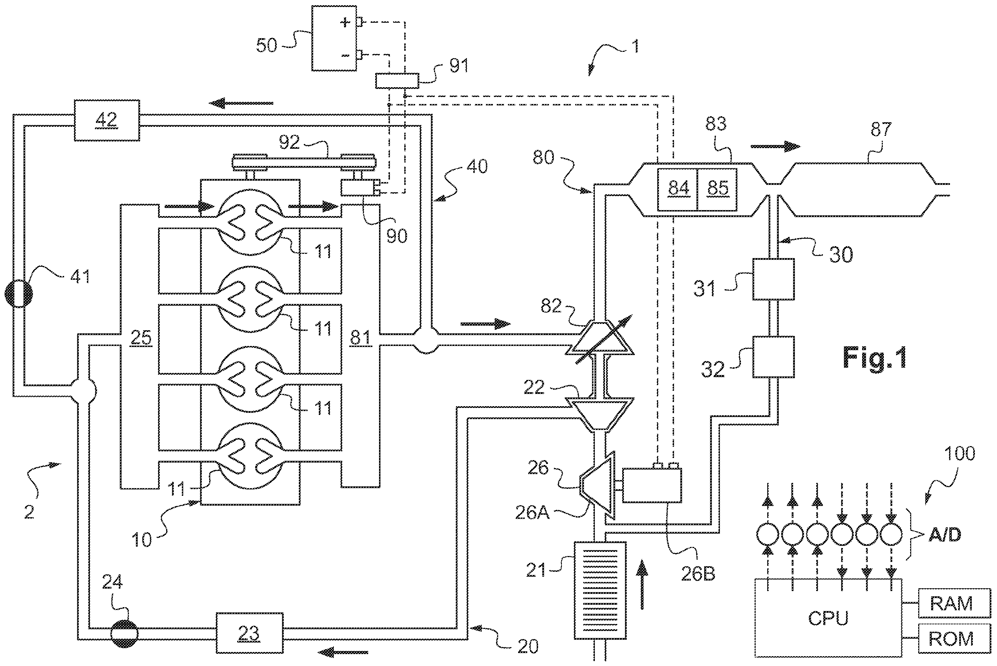

Sur la figure 1, on a représenté schématiquement un groupe motopropulseur 1 de véhicule automobile, qui comprend un moteur thermique 2 (ou « moteur à combustion interne ») associé à une machine électrique 90 réversible, et un calculateur 100 adapté à piloter le moteur thermique 2 et la machine électrique 90.

Le moteur thermique 2 comprend un bloc-moteur 10 pourvu d'un vilebrequin relié à quatre pistons (non représentés) logés dans quatre cylindres 11. Ce moteur est ici à allumage par compression (Diesel). Il pourrait également être à allumage commandé (Essence). Il pourrait comporter davantage de cylindres ou au contraire un nombre réduit de cylindres.

En amont des cylindres 11, le moteur thermique 2 comporte une ligne d'admission 20 qui prélève l'air frais dans l'atmosphère et qui débouche dans un répartiteur d'air 25 agencé pour répartir l'air frais vers chacun des quatre cylindres 11 du bloc-moteur 10.

Cette ligne d'admission 20 comporte, dans le sens d'écoulement de l'air frais, un filtre à air 21 qui filtre l'air frais prélevé dans l'atmosphère, un compresseur principal 22 qui comprime l'air frais filtré par le filtre à air 21, un refroidisseur d'air principal 23 qui refroidit cet air frais comprimé, et une vanne d'admission 24 qui permet de réguler le débit d'air frais débouchant dans le répartiteur d'air 25.

Elle comporte également un compresseur électrique 26 situé entre le filtre à air 21 et le refroidisseur d'air principal 23.

Ce compresseur électrique 26 est ici situé en amont du compresseur principal 22. Dans une variante non représentée, le compresseur électrique 26 pourrait être situé en aval du compresseur principal 22.

Il comporte une roue à aubes 26A montée dans la ligne d'admission 20 et un moteur électrique 26B d'actionnement de la roue à aubes 26A, alimenté en courant par une batterie d'accumulateurs 50.

En sortie des cylindres 11, le moteur thermique 2 comporte une ligne d'échappement 80 qui s'étend depuis un collecteur d'échappement 81 dans lequel débouchent les gaz qui ont été préalablement brûlés dans les cylindres 11, jusqu'à un silencieux d'échappement 87 permettant de détendre les gaz brûlés avant qu'ils ne soient évacués dans l'atmosphère. Elle comporte par ailleurs, dans le sens d'écoulement des gaz brûlés, une turbine 82 et un moyen de traitement 83 des gaz brûlés.

La turbine 82 est entraînée en rotation par le flux de gaz brûlés sortant du collecteur d'échappement 81, et elle permet d'entraîner le compresseur principal 22 en rotation, grâce à des moyens de couplage mécanique tels qu'un simple arbre de transmission.

Il est ici en outre prévu des moyens de délestage de la turbine 82.

Ces moyens de délestage sont ici formés par un moteur pas-à-pas qui permet de régler l'inclinaison des aubes de la turbine 82. On comprend alors que suivant cette inclinaison, le flux de gaz brûlés pourra ou non entraîner les aubes de la turbine en rotation. En variante, l'inclinaison des aubes pourrait être réglée par un système d'actionnement de type pneumatique.

En variante, les moyens de délestage pourraient comporter une conduite de court-circuitage de la turbine (plus généralement connue sous le nom de « conduite waste-gate »), qui serait branchée en parallèle de la turbine et qui serait équipée d'une vanne de régulation du débit de gaz brûlés la traversant.

Le moyen de traitement 83 des gaz brûlés peut quant à lui se présenter sous différentes formes. On considérera ici qu'il comporte un piège à oxydes d'azote 84 suivi d'un filtre à particules 85.

Si le moteur était à allumage commandé (c'est-à-dire « à Essence »), il comporterait plutôt un catalyseur trois voies.

Ici, dans un mode de fonctionnement normal, le piège à oxydes d'azote 84 permet de retenir les oxydes d'azote et le filtre à particules 85 permet de retenir les suies et particules solides en suspension dans les gaz brûlés.

Dans un mode de régénération de ces deux éléments, on fait en sorte de mêler aux gaz brûlés des hydrocarbures imbrulés, de manière que ces derniers transforment les oxydes d'azote en eau, en dioxyde de carbone et en dioxyde d'azote. Cette réaction chimique exothermique permet alors d'accroître la température des gaz brûlés, et partant, de brûler les suies et particules retenues dans le filtre à particules 85.

Dans ce mode de régénération, le compresseur électrique 26 est préféré au compresseur principal 22 pour comprimer l'air frais, de manière à éviter toute détente des gaz brûlés au niveau de la turbine 82.

Comme cela apparaît sur la figure 1, le moteur thermique 2 peut éventuellement aussi comporter une ligne de recirculation des gaz brûlés à haute pression, qui permet de prélever une partie des gaz brûlés circulant dans la ligne d'échappement 80 pour la réinjecter dans les cylindres 11 afin de réduire les émissions polluantes du moteur, et en particulier les émissions d'oxydes d'azote.

Cette ligne de recirculation est communément appelée ligne EGR-HP 40, conformément à l'acronyme anglo-saxon de « Exhaust Gaz Recirculation - High Pressure ». Elle prend naissance dans la ligne d'échappement 80, entre le collecteur d'échappement 81 et la turbine 82, et elle débouche dans la ligne d'admission 20, entre la vanne d'admission 24 et le répartiteur d'air 25.

Cette ligne EGR-HP 40 comporte un refroidisseur secondaire 42 suivi d'une vanne 41 de régulation du débit.

Le moteur thermique 2 peut éventuellement aussi comporter une ligne de recirculation des gaz brûlés à basse pression.

Cette ligne de recirculation est communément appelée ligne EGR-LP 30, conformément à l'acronyme anglo-saxon de « Exhaust Gaz Recirculation - Low Pressure ». Elle prend naissance dans la ligne d'échappement 80, à la sortie du filtre à particules 85, et débouche dans la ligne d'admission 20, entre le filtre à air 21 et le compresseur électrique 26.

Cette ligne EGR-LP 30 comporte un échangeur thermique 31 suivi d'une vanne 32 de régulation du débit.

Le moteur thermique 2 comporte par ailleurs un circuit de refroidissement, qui passe notamment par le compresseur électrique 26.

La machine électrique 90 réversible est quant à elle couplée au vilebrequin du moteur thermique 2.

Telle que représentée sur la figure 1, la machine électrique 90 est formée par un alterno-démarreur.

Elle est ici directement couplée au vilebrequin du bloc-moteur 10 par une courroie 92.

En variante, elle pourrait y être couplée indirectement. Elle pourrait ainsi être couplée à l'un des arbres de la boîte de vitesses ou encore à la courroie d'accessoire du groupe motopropulseur 1.

Quoi qu'il en soit, cette machine électrique 90 est apte à fonctionner en mode « moteur » ou en mode « génératrice », sous la supervision d'un boîtier de commande 91 piloté par le calculateur 100.

En mode « génératrice », la machine électrique 90 est un alternateur qui fournit un courant électrique destiné à être stocké dans la batterie d'accumulateurs 50.

En mode « moteur », elle est au contraire alimentée par le courant électrique stocké dans la batterie d'accumulateurs 50 et elle fournit un couple au vilebrequin.

Pour piloter les différents organes du groupe motopropulseur 1 et notamment l'inclinaison des aubes de la turbine 82, le boîtier de commande 91 et le moteur électrique 268 du compresseur électrique 26, il est prévu un calculateur 100 comportant un processeur (CPU), une mémoire vive (RAM), une mémoire morte (ROM), des convertisseurs analogiques-numériques (A/D), et différentes interfaces d'entrée et de sortie.

Grâce à ses interfaces d'entrée, le calculateur 100 est adapté à recevoir de différents capteurs des signaux d'entrée relatifs au fonctionnement du moteur thermique 2.

Dans sa mémoire vive, le calculateur 100 mémorise ainsi en continu :

- la température à l'extérieur du compresseur électrique 26, ici au moyen d'un capteur fixé au châssis du compresseur électrique 26,
- l'intensité du courant électrique alimentant le compresseur électrique 26,
- la température du liquide de refroidissement traversant le compresseur électrique,
- la pression de l'air frais à la sortie du compresseur électrique 26,
- la pression de l'air frais à l'entrée du compresseur électrique 26,
- le débit d'air frais traversant le compresseur électrique 26,
- la vitesse de rotation $\omega_{26}$ du compresseur électrique 26, et
- la tension aux bornes de la batterie d'accumulateurs 50.

La mémoire morte mémorise quant à elle des données utilisées dans le cadre du procédé décrit ci-dessous.

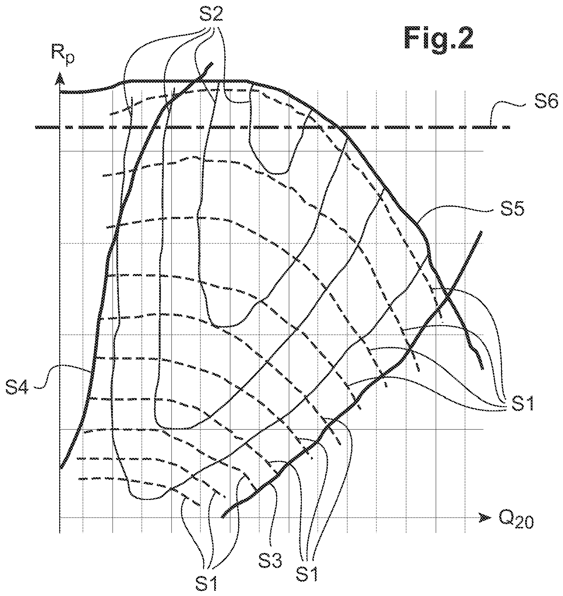

Elle mémorise notamment des cartographies prédéterminées sur banc d'essai grâce auxquelles le calculateur est adapté à générer, pour chaque condition de fonctionnement du moteur, des signaux de sortie. L'une de ces cartographies, illustrée sur la figure 2, sera décrite en détail dans la suite de cet exposé.

La mémoire morte mémorise aussi une application informatique, constituée de programmes d'ordinateur comprenant des instructions dont l'exécution par le processeur permet la mise en oeuvre par le calculateur du procédé décrit ci-après.

Enfin, grâce à ses interfaces de sortie, le calculateur 100 est adapté à transmettre des signaux de sortie aux différents organes du moteur. Il est ainsi notamment adapté à contrôler l'orientation des aubes de la turbine 82 et la vitesse de rotation du compresseur électrique 26.

Classiquement, lorsque le conducteur du véhicule automobile met le contact, le calculateur 100 s'initialise puis commande la machine électrique 90 et le système d'injection de carburant pour que ceux-ci démarrent le moteur thermique 2.

Lorsque le moteur est démarré, l'air frais prélevé dans l'atmosphère par la ligne d'admission 20 est filtré par le filtre à air 21, éventuellement mélangé avec des gaz brûlés issus de la ligne EGR-BP 30, éventuellement comprimé par le compresseur principal 22 et/ou par le compresseur électrique 26, refroidi par le refroidisseur d'air principal 23, éventuellement mélangé avec des gaz brûlés issus de la ligne EGR-HP 40, puis brûlé dans les cylindres 11.

A leur sortie des cylindres 11, les gaz brûlés sont détendus dans la turbine 82, traités et filtrés dans le piège à oxydes d'azote 84 et le filtre à particules 85, puis détendus à nouveau dans le silencieux d'échappement 87 avant d'être rejetés dans l'atmosphère.

La présente invention porte alors plus précisément sur la manière selon laquelle le calculateur 100 va, à chaque pas de temps, élaborer la consigne de pilotage $C_1$ du moteur électrique 268 du compresseur électrique 26.

Ici, selon une caractéristique particulièrement avantageuse de l'invention, le calculateur 100 va mettre en oeuvre un procédé comportant :

- une étape d'acquisition d'au moins un premier paramètre thermodynamique relatif au fonctionnement du moteur à combustion interne 2, et d'au moins un second paramètre relatif au fonctionnement du compresseur électrique 26 et/ou au niveau de charge de la batterie d'accumulateurs 50 (les premier et seconds paramètres étant préférentiellement distincts),
- une étape de calcul d'une consigne préliminaire $C_0$ de pilotage du compresseur électrique 26, en fonction de chaque premier paramètre acquis,
- une étape de comparaison au cours de laquelle on vérifie que chaque second paramètre acquis est compris dans un intervalle de valeurs fonctionnelles, et
- une étape de détermination de la consigne de pilotage $C_1$ en fonction de la consigne préliminaire $C_0$ et du résultat de la comparaison.

Ici, l'étape de calcul de la consigne préliminaire $C_0$ ne sera pas décrite en détail, puisqu'elle est bien connue de l'homme du métier et ne fait pas en propre l'objet de la présente invention. Elle consiste généralement à déterminer le niveau de pression d'air frais souhaité dans le répartiteur d'air 25, puis à déterminer dans quelle mesure le compresseur principal 22 et le compresseur électrique 26 peuvent contribuer à atteindre ce niveau de pression.

On s'intéressera alors davantage aux étapes de comparaison et de détermination.

L'étape de comparaison consistera à vérifier que les seconds paramètres acquis restent dans des intervalles de valeurs fonctionnelles afin de s'assurer que le pilotage du compresseur électrique 26 selon la consigne préliminaire $C_0$ ne risque pas de trop contraindre le compresseur électrique 26.

L'étape de détermination consistera alors à corriger cette consigne préliminaire $C_0$ dans l'éventualité où l'un au moins des seconds paramètres acquis sort de son intervalle de valeurs fonctionnelles.

Ces étapes de comparaison et de détermination seront plus précisément mises en oeuvre de la manière suivante par le calculateur 100.

Le premier des seconds paramètres qui sera considéré sera la température interne $T_{int}$ du compresseur électrique 26.

En effet, en fonctionnement, la vitesse de rotation de la roue à aubes 26A du compresseur électrique 26 peut dépasser par exemple les 60.000 tr/min. Dans ces conditions, le compresseur électrique 26 va générer une forte chaleur, du fait de ses pertes électromagnétiques et des frottements, ce qui risque de provoquer sa casse.

La surveillance de la température interne $T_{int}$ du compresseur électrique 26 va donc permettre d'éviter une telle casse.

Cette température interne $T_{int}$ pourrait être mesurée à l'intérieur du compresseur électrique 26.

Toutefois, ici, pour réduire les coûts de fabrication, cette température interne $T_{int}$ sera calculée en fonction de la température externe $T_{ext}$ du compresseur électrique 26, de la température $T_{liq}$ du liquide de refroidissement circulant au travers du compresseur électrique 26, et de l'intensité $I_{26}$ du courant électrique alimentant le compresseur électrique 26.

Elle pourra être calculée de diverses manières, par exemple au moyen de la formulation suivante :

$$T_{int} = f\left(a_1.T_{ext} + a_2.T_{liq} + a_3.I_{26}^2\right)$$

avec $a_1$, $a_2$, as des constantes à calibrer, et $f$ une fonction de filtrage, par exemple un filtre passe bas du premier ou du deuxième ordre.

La température interne $T_{int}$ pourrait en variante être déterminée au moyen d'une représentation d'état, par exemple via un filtre de Kalman. Dans cette variante, on pourrait utiliser comme vecteur d'entrée les valeurs de la température externe $T_{ext}$, de la température $T_{liq}$ et du courant $I_{26}$. On pourra utiliser comme vecteur de sortie la valeur de la température interne $T_{int}$.

Quoi qu'il en soit, une fois la valeur de la tem-

pérature interne $T_{int}$ obtenue, le calculateur 100 va déterminer si cette température interne est ou non comprise dans son intervalle de valeurs fonctionnelles. Cet intervalle pourra par exemple être défini entre deux bornes de température, à savoir 0°C et 80°C.

Dans le cas où la température interne $T_{int}$ est comprise dans son intervalle de valeurs fonctionnelles, la consigne de pilotage $C_1$ est considérée égale à la consigne préliminaire $C_0$.

Dans le cas contraire, on peut envisager que la consigne de pilotage $C_1$ soit choisie égale à zéro.

En variante, on pourra envisager que la consigne de pilotage $C_1$ décroisse linéairement entre 70°C et 80°C, depuis la valeur de consigne préliminaire $C_0$ jusqu'à zéro, de manière que le compresseur électrique 26 ne s'arrête pas brutalement lorsque le compresseur électrique 26 chauffe.

Dans la suite de l'exposé, pour la clarté de ce dernier, on considérera que la température interne $T_{int}$ est comprise dans son intervalle de valeurs fonctionnelles.

Comme le montre la figure 2, le compresseur électrique 26 est conçu pour fonctionner sur des points de fonctionnement thermomécaniques compris entre différents seuils (matérialisés par les courbes S3, S4, S5 et S6).

Le calculateur 100 est alors programmé pour contrôler que le point de fonctionnement du compresseur reste éloigné de ces seuils, c'est-à-dire reste compris dans un intervalle de valeurs fonctionnelles.

Comme cela sera détaillé ci-après, les limites thermomécaniques qui seront prises ici en considération seront une limite de pression, une limite de pompage, une limite d'étouffement, et une limite de vitesse de rotation du compresseur électrique 26.

Pour cela, parmi les seconds paramètres acquis, le calculateur acquiert la pression de l'air frais à la sortie du compresseur électrique 26.

En effet, au-delà d'une certaine pression, les aubes du compresseur électrique peuvent se briser ou la conduite située entre le compresseur électrique 26 et le compresseur principal 22 peut se démancher.

La surveillance de la pression de l'air frais à la sortie du compresseur électrique 26 va donc permettre d'éviter ces inconvénients.

Ainsi, une fois la valeur de cette pression mesurée, le calculateur 100 va déterminer si elle est ou non comprise dans son intervalle de valeurs fonctionnelles. Cet intervalle pourra par exemple être compris entre 0 Pa et $4.10^5$ Pa. Ce seuil de pression est ici illustré sur la figure 2, par la ligne discontinue S6.

Parmi les seconds paramètres acquis, le calculateur acquiert également la pression de l'air frais à l'entrée du compresseur électrique 26, et le débit $Q_{20}$ d'air frais traversant le compresseur électrique 26 (axe d'abscisse de la figure 2).

Les pressions de l'air frais à l'entrée et à la sortie du compresseur électrique 26 permettent de calculer un rapport de pressions Rp (axe d'ordonnée de la figure 2).

Ces différentes valeurs permettent d'éviter tout pompage de la roue à aubes 26A du compresseur électrique 26.

En effet, lorsque le débit $Q_{20}$ d'air frais traversant le compresseur électrique 26 est faible, il apparaît un risque d'oscillation de ce débit qui est potentiellement destructif pour les aubes du compresseur électrique 26.

La limite de débit $Q_{20}$ en deçà de laquelle apparaît un risque de pompage est représentée sur la figure 2 par la courbe S4.

La surveillance du débit $Q_{20}$ et du rapport de pressions Rp va donc permettre d'éviter que le compresseur électrique travaille en deçà de cette courbe continue S4.

Pour cela, une fois les valeurs de débit $Q_{20}$ et de rapport de pressions Rp acquises, le calculateur 100 va déterminer la position du point de fonctionnement du compresseur électrique 26 et il va vérifier s'il est ou non compris dans la zone de risque de pompage.

La surveillance du débit $Q_{20}$ et du rapport de pressions Rp va par ailleurs permettre d'éviter que le compresseur électrique 26 ne s'étouffe.

En effet, lorsque le débit $Q_{20}$ d'air frais traversant le compresseur électrique 26 est élevé, il apparaît un risque que le compresseur électrique 26 ne soit plus en mesure d'assurer sa fonction : on parle d'étouffement.

La limite de débit $Q_{20}$ au-delà de laquelle apparaît un risque d'étouffement est représentée sur la figure 2 par la courbe S3.

La surveillance du débit $Q_{20}$ et du rapport de pressions Rp va donc permettre d'éviter que le compresseur électrique travaille au-delà de cette courbe continue S3.

Pour cela, une fois les valeurs de débit $Q_{20}$ et de rapport de pressions Rp acquises, le calculateur 100 va déterminer la position du point de fonctionnement du compresseur électrique 26 et il va vérifier s'il est ou non compris dans la zone de risque d'étouffement.

Parmi les seconds paramètres acquis, le calculateur acquiert aussi la vitesse de rotation $\omega_{26}$ du compresseur électrique 26.

En effet, au-delà d'une certaine vitesse de rotation, les aubes du compresseur électrique 26 peuvent se briser. La surveillance de cette vitesse de rotation va donc permettre d'éviter une telle casse.

Pour cela, on pourra soit mesurer la vitesse de rotation $\omega_{26}$, soit extrapoler cette vitesse de rotation en fonction des valeurs du débit $Q_{20}$ et du rapport de pressions Rp.

Quoi qu'il en soit, une fois la valeur de cette vitesse de rotation $\omega_{26}$ connue, le calculateur 100 va déterminer si elle est ou non comprise dans son intervalle de valeurs fonctionnelles. Cet intervalle pourra par exemple être compris entre 0 tr/min et 80.000 tr/min. Ce seuil de vitesse est ici illustré sur la figure 2 par la courbe S5.

Sur cette même figure 2, les courbes S1 sont des courbes d'iso-vitesses, tandis que les courbes S2, sensiblement en forme de U sur la figure, sont des courbes d'iso-rendements. Parmi ces différentes courbes d'iso-rendement, la plus longue représente le rendement le plus faible, et la plus courte représente le rendement le plus élevé.

La surveillance du débit $Q_{20}$ et du rapport de pressions Rp va par ailleurs permettre d'optimiser le rendement du compresseur électrique 26, afin de réduire sa consommation électrique.

Pour cela, on va chercher à positionner le point de fonctionnement du compresseur électrique 26 dans une zone de rendement admissible, c'est-à-dire au centre de la zone comprise entre les courbes S3, S4 et S5. Plus précisément, on pourra positionner le point de fonctionnement du compresseur électrique 26 au voisinage de la courbe d'iso-rendement S2 la plus courte de manière à atteindre un rendement le plus élevé possible.

La surveillance du débit $Q_{20}$ et du rapport de pressions Rp va donc permettre d'éviter que le compresseur électrique travaille dans des zones de rendement réduites et qu'il ne consomme une trop grande quantité de courant électrique.

Pour cela, une fois les valeurs de débit $Q_{20}$ et de rapport de pressions Rp acquises, le calculateur 100 va déterminer la position du point de fonctionnement du compresseur électrique 26 et il va vérifier s'il est ou non compris dans la zone de rendement admissible.

A l'issue de l'ensemble de ces vérifications permettant d'assurer que le compresseur électrique travaille sur un point de fonctionnement thermomécanique admissible, le calculateur détermine la consigne de pilotage $C_1$.

Dans le cas où le point de fonctionnement thermomécanique est admissible, la consigne de pilotage $C_1$ est considérée égale à la consigne préliminaire $C_0$.

Dans le cas contraire (où le point de fonctionnement est situé en dehors de la zone située entre les courbes S3, S4, S5 et S6, ou dans une zone de rendement faible ou de pompage au-delà de la courbe S4) on peut envisager que la consigne de pilotage $C_1$ soit choisie égale à zéro. En variante, on peut envisager qu'elle soit choisie égale à une valeur qui est fonction de la consigne préliminaire $C_0$ et qui permette de recentrer le point de fonctionnement vers le centre de la zone comprise entre les courbes S3, S4 et S5.

Dans la suite de l'exposé, pour la clarté de ce dernier, on considérera que le point de fonctionnement thermomécanique est admissible.

Un autre des seconds paramètres qui sera considéré sera l'état de charge SOC de la batterie d'accumulateurs 50.

On rappelle à ce sujet que l'état de charge (ou « niveau de charge ») d'une batterie, noté SOC (acronyme anglais de "State Of Charge"), est un paramètre illustrant la quantité d'énergie restant dans la batterie. Cet état de charge SOC s'exprime en pourcentage. Il traduit l'état de chargement de la batterie entre un niveau de charge minimal où la batterie n'est plus utilisable (0 %), et un niveau de charge maximal (100 %). En pratique, cet état de charge SOC doit rester compris entre 5 et 95% afin d'éviter une dégradation prématurée des performances de la batterie.

Ici, on considère ce paramètre de manière à utiliser le compresseur électrique 26 à bon escient, c'est-à-dire uniquement si la batterie d'accumulateurs 50 est suffisamment chargée.

Pour cela, le calculateur calcule le niveau de charge SOC (selon une méthode quelconque, bien connue de l'homme du métier, compte tenu notamment de la tension aux bornes de la batterie d'accumulateurs 50).

Le calculateur 100 détermine ensuite si ce niveau de charge SOC est ou non compris dans son intervalle de valeurs fonctionnelles. Cet intervalle pourra par exemple être défini entre 20% et 80%.

Dans le cas où le niveau de charge SOC est compris dans son intervalle de valeurs fonctionnelles, la consigne de pilotage $C_1$ est considérée égale à la consigne préliminaire $C_0$.

Dans le cas où le niveau de charge SOC est inférieur à 20%, on peut envisager que la consigne de pilotage $C_1$ soit choisie égale à zéro.

En variante, on pourra envisager que la consigne de pilotage $C_1$ décroisse linéairement lorsque le niveau de charge SOC baisse de 30% à 20%, depuis la valeur de consigne préliminaire $C_0$ jusqu'à zéro, de manière à éviter un arrêt brutal du compresseur électrique 26.

Dans la suite de l'exposé, pour la clarté de ce dernier, on considérera que le niveau de charge SOC est compris dans son intervalle de valeurs fonctionnelles.

Un dernier des seconds paramètres qui sera ici considéré sera la durée d'utilisation $\Delta t$ du compresseur électrique 26 écoulée depuis un moment antérieur prédéterminé. Ce moment antérieur pourrait être par exemple le moment où le moteur thermique 2 a été démarré. Préférentiellement, il s'agira plutôt du moment où le compresseur électrique 26 a été démarré.

Ce second paramètre sera utile pour éviter toute dégradation du compresseur électrique 26. En effet, comme cela a été exposé supra, l'utilisation du compresseur électrique 26 a pour effet naturel d'augmenter sa température interne $T_{int}$.

Normalement, compte tenu des seconds paramètres considérés, cette température interne $T_{int}$ ne devrait jamais dépasser le seul admissible (ici 80°C).

Toutefois, par sécurité, on peut prévoir de limiter la durée d'utilisation $\Delta t$ ininterrompue du compresseur électrique (par exemple à une durée de 10 minutes).

Ici alors, dans le cas où la durée d'utilisation $\Delta t$ est inférieure à 10 minutes, la consigne de pilotage $C_1$ est considérée égale à la consigne préliminaire $C_0$.

Dans le cas contraire, on peut envisager que la consigne de pilotage $C_1$ soit choisie égale à zéro et qu'elle reste égale à zéro pendant une durée minimum de refroidissement (par exemple de 5 minutes).

En résumé, le calculateur pourra prendre en compte l'ensemble des seconds paramètres pour modifier en conséquence la valeur de la consigne préliminaire, afin d'en déduire la consigne de pilotage $C_1$.

On notera que si plusieurs seconds paramètres sortent simultanément de leurs intervalles de valeurs fonctionnelles, la solution pourra être de choisir la consigne de pilotage $C_1$ égale à zéro.

Bien entendu, diverses autres modifications peuvent être apportées à la méthode et au groupe motopropulseur selon l'invention dans le cadre des revendications annexées.

En particulier, on pourra prévoir de placer le compresseur électrique en aval plutôt qu'en amont du compresseur principal (22).

On pourra par ailleurs prévoir d'équiper le moteur thermique d'une conduite de court-circuitage du compresseur électrique, c'est-à-dire d'une conduite branchée en parallèle du compresseur électrique et permettant, à l'aide d'une vanne, de délester le compresseur électrique 26.

Encore en variante, on pourrait prévoir que le groupe motopropulseur soit dépourvu de machine électrique (90).

## Revendications

1. Méthode d'élaboration d'une consigne de pilotage ($C_1$) d'un compresseur électrique (26) qui est situé dans une ligne d'admission d'air (20) d'un moteur à combustion interne (2) et qui est alimenté en courant par une batterie d'accumulateurs (50), comportant :

   - une étape d'acquisition d'au moins un premier paramètre thermodynamique relatif au fonctionnement du moteur à combustion interne (2), et
   - une étape de calcul d'une consigne préliminaire ($C_0$) de pilotage du compresseur électrique (26), en fonction de chaque premier paramètre acquis,

   **caractérisée en ce qu'**elle comporte en outre :

   - une étape d'acquisition d'au moins un second paramètre comprenant au moins la température interne ($T_{int}$) du compresseur électrique, ladite température interne ($T_{int}$) étant calculée en fonction de la température externe ($T_{ext}$) du compresseur électrique (26), de la température ($T_{liq}$) du liquide de refroidissement circulant au travers du compresseur électrique, et de l'intensité ($I_{26}$) du courant électrique alimentant le compresseur électrique,
   - une étape de comparaison au cours de laquelle on vérifie que chaque second paramètre (SOC, $\Delta t$, $T_{int}$, $R_P$, $Q_{20}$, $\omega_{26}$) acquis est compris dans un intervalle de valeurs fonctionnelles, au cours de laquelle on vérifie que la température interne ($T_{int}$) du compresseur électrique est comprise dans l'intervalle de valeurs fonctionnelles, et
   - une étape de détermination de la consigne de pilotage ($C_1$) en fonction de la consigne préliminaire ($C_0$) et du résultat de la comparaison, ladite consigne de pilotage (C1) étant utilisée pour contrôler le compresseur électrique (26).

2. Méthode d'élaboration selon la revendication précédente, dans laquelle un second paramètre supplémentaire est relatif à la pression d'air en aval du compresseur électrique (26).

3. Méthode d'élaboration selon l'une des revendications précédentes, dans laquelle un second paramètre supplémentaire est relatif au débit d'air ($Q_{20}$) traversant le compresseur électrique (26).

4. Méthode d'élaboration selon l'une des revendications précédentes, dans laquelle un second paramètre supplémentaire est relatif à la vitesse de rotation ($\omega_{26}$) du compresseur électrique (26).

5. Méthode d'élaboration selon l'une des revendications précédentes, dans laquelle un second paramètre supplémentaire est relatif à la durée d'utilisation ($\Delta t$) du compresseur électrique (26).

6. Méthode d'élaboration selon l'une des revendications 1 à 5, dans laquelle, à l'étape de détermination, la consigne de pilotage ($C_1$) est choisie égale à la consigne préliminaire ($C_0$) si chaque second paramètre (SOC, $T_{int}$, $R_P$, $Q_{20}$, $\omega_{26}$) est compris dans l'intervalle de valeurs fonctionnelles, et est sinon choisie égale à zéro.

7. Méthode d'élaboration selon l'une des revendications 1 à 5, dans laquelle, à l'étape de détermination, la consigne de pilotage ($C_1$) est choisie égale à la consigne préliminaire ($C_0$) si chaque second paramètre (SOC, $T_{int}$, $R_P$, $Q_{20}$, $\omega_{26}$) est compris dans l'intervalle de valeurs fonctionnelles, et est sinon choisie égale à une valeur qui est fonction de la consigne préliminaire ($C_0$) et qui est strictement inférieure à la consigne préliminaire ($C_0$).

8. Groupe motopropulseur (1) pour véhicule automobile, comportant un moteur à combustion interne (2) qui comprend :

   - un bloc moteur (10) qui délimite des cylindres (11) et qui est équipé d'un vilebrequin,
   - une ligne d'admission (20) d'air frais dans les cylindres (11),
   - une ligne d'échappement (80) de gaz brûlés hors des cylindres (11), qui comprend au moins un moyen de traitement (83) des gaz brûlés,

- un turbocompresseur qui comprend une turbine (82) montée dans la ligne d'échappement (80) et un compresseur principal (22) monté dans la ligne d'admission (20), et

- un compresseur électrique (26) qui comporte une roue à aubes (26A) montée dans la ligne d'admission (20) et un moteur électrique (26B) d'actionnement de la roue à aubes (26A) alimenté en courant par une batterie d'accumulateurs (50),

**caractérisé en ce qu'**il comporte en outre un calculateur (100) adapté à mettre en oeuvre une méthode d'élaboration d'une consigne de pilotage $(C_1)$ du compresseur électrique (26) conforme à l'une des revendications précédentes et à piloter le moteur électrique (26B) du compresseur électrique (26) selon cette consigne de pilotage $(C_1)$.

9. Groupe motopropulseur (1) selon la revendication précédente, comportant en outre une machine électrique (90) qui est couplée au vilebrequin du moteur à combustion interne (2) et qui est connectée à la batterie d'accumulateurs (50).

**Patentansprüche**

1. Verfahren zum Ausarbeiten eines Steuerungssollwerts $(C_1)$ eines elektrischen Verdichters (26), der sich in einer Lufteinlassleitung (20) eines Verbrennungsmotors (2) befindet und der durch eine Akkumulatorenbatterie (50) mit Strom versorgt wird, das aufweist:

 - einen Schritt zum Erfassen mindestens eines ersten thermodynamischen Parameters, der sich auf die Funktionsweise des Verbrennungsmotors (2) bezieht, und
 - einen Schritt zum Berechnen eines vorläufigen Sollwerts $(C_0)$ zum Steuern des elektrischen Verdichters (26) in Abhängigkeit von jedem erfassten ersten Parameter,

**dadurch gekennzeichnet, dass** es ferner aufweist:

 - einen Schritt zum Erfassen mindestens eines zweiten Parameters, umfassend mindestens die interne Temperatur $(T_{int})$ des elektrischen Verdichters, wobei die interne Temperatur $(T_{int})$ in Abhängigkeit von der externen Temperatur $(T_{ext})$ des elektrischen Verdichters (26) berechnet wird, die Temperatur $(T_{liq})$ der Kühlflüssigkeit, die durch den elektrischen Verdichter zirkuliert, und die Intensität $(I_{26})$ des elektrischen Stroms, der den elektrischen Verdichter versorgt,
 - einen Vergleichsschritt, im Laufe dessen überprüft wird, ob jeder erfasste zweite Parameter $(SOC, \Delta t, T_{int} R_P, Q_{20}, \omega_{26})$ innerhalb eines Bereichs von Funktionswerten liegt, während dessen überprüft wird, ob die interne Temperatur $(T_{int})$ des elektrischen Verdichters innerhalb des Bereichs der Funktionswerte liegt, und
 - einen Schritt zum Bestimmen des Steuerungssollwerts $(C_1)$ in Abhängigkeit von dem vorläufigen Sollwert $(C_0)$ und dem Ergebnis des Vergleichs, wobei der Steuerungssollwert (C1) zum Kontrollieren des elektrischen Verdichters (26) verwendet wird.

2. Ausarbeitungsverfahren nach dem vorstehenden Anspruch, wobei sich ein zweiter zusätzlicher Parameter auf den Luftdruck stromabwärts des elektrischen Verdichters (26) bezieht.

3. Ausarbeitungsverfahren nach einem der vorstehenden Ansprüche, wobei sich ein zweiter zusätzlicher Parameter auf den Luftstrom $(Q_{20})$ durch den elektrischen Verdichter (26) bezieht.

4. Ausarbeitungsverfahren nach einem der vorstehenden Ansprüche, wobei sich ein zweiter zusätzlicher Parameter auf die Rotationsgeschwindigkeit $(\omega_{26})$ des elektrischen Verdichters (26) bezieht.

5. Ausarbeitungsverfahren nach einem der vorstehenden Ansprüche, wobei sich ein zweiter zusätzlicher Parameter auf die Nutzungsdauer $(\Delta t)$ des elektrischen Verdichters (26) bezieht.

6. Ausarbeitungsverfahren nach einem der Ansprüche 1 bis 5, wobei in dem Bestimmungsschritt der Steuerungssollwert $(C_1)$ gleich dem vorläufigen Sollwert $(C_0)$ gewählt wird, falls jeder zweite Parameter $(SOC, T_{int}, Rp, Q_{20}, \omega_{26})$ innerhalb des Bereichs der Funktionswerte liegt, und ansonsten gleich null gewählt wird.

7. Ausarbeitungsverfahren nach einem der Ansprüche 1 bis 5, wobei in dem Bestimmungsschritt der Steuerungssollwert $(C_1)$ gleich dem vorläufigen Sollwert $(C_0)$ gewählt wird, falls jeder zweite Parameter $(SOC, T_{int}, Rp, Q_{20}, \omega_{26})$ innerhalb des Bereichs der Funktionswerte liegt, und ansonsten gleich einem Wert gewählt wird, der von dem vorläufigen Sollwert $(C_0)$ abhängt und der strikt kleiner als der vorläufige Sollwert $(C_0)$ ist.

8. Antriebsstrang (1) für ein Kraftfahrzeug, das einen Verbrennungsmotor (2) aufweist, der umfasst:

 - einen Motorblock (10), der Zylinder (11) begrenzt und der mit einer Kurbelwelle ausgestattet ist,
 - eine Leitung (20) zum Einlassen von frischer Luft in die Zylinder (11),
- eine Leitung (80) zum Ablassen von verbrannten Gasen aus den Zylindern (11), die mindestens ein Mittel (83) zum Behandeln der verbrannten Gase umfasst,
- einen Turboverdichter, der eine Turbine (82), die in der Ablassleitung (80) montiert ist, und einen Hauptverdichter (22) umfasst, der in der Einlassleitung (20) montiert ist, und
- einen elektrischen Verdichter (26), der ein Laufrad (26A), das in der Einlassleitung (20) montiert ist, und einen elektrischen Motor (26B) zum Antreiben des Laufrads (26A) umfasst, der durch eine Akkumulatorenbatterie (50) mit Strom versorgt wird,

**dadurch gekennzeichnet, dass** er ferner einen Rechner (100) aufweist, der angepasst ist, um ein Verfahren zum Ausarbeiten eines Steuerungssollwerts ($C_1$) des elektrischen Verdichters (26) nach einem der vorstehenden Ansprüche zu implementieren, und um den elektrischen Motor (26B) des elektrischen Verdichters (26) gemäß diesem Steuerungssollwert ($C_1$) zu steuern.

9. Antriebsstrang (1) nach dem vorstehenden Anspruch, der ferner eine elektrische Maschine (90) aufweist, die mit der Kurbelwelle des Verbrennungsmotors (2) gekoppelt ist und die mit der Akkumulatorenbatterie (50) verbunden ist.

**Claims**

1. Method for producing a control instruction ($C_1$) for an electric compressor (26) which is located in an air intake line (20) of an internal combustion engine (2) and which is supplied with power by a storage battery (50), comprising:

   - a step of acquiring at least one first thermodynamic parameter relating to the operation of the internal combustion engine (2), and
   - a step of calculating a preliminary control instruction ($C_0$) for the electric compressor (26), as a function of each first parameter acquired,

   **characterized in that** it further comprises:

   - a step of acquiring at least one second parameter comprising at least the internal temperature ($T_{int}$) of the electric compressor, said internal temperature ($T_{int}$) being calculated as a function of the external temperature ($T_{ext}$) of the electric compressor (26), the temperature ($T_{liq}$) of the coolant flowing through the electric compressor, and the strength ($I_{26}$) of the electric current supplying the electric compressor,

   - a comparing step, in which it is verified that each second parameter (SOC, $\Delta t$, $T_{int}$, $R_P$, $Q_{20}$, $\omega_{26}$) acquired is within a range of functional values, in which it is verified that the internal temperature ($T_{int}$) of the electric compressor is within the range of functional values, and
   - a step of determining the control instruction (Ci) as a function of the preliminary instruction ($C_0$) and the result of the comparison, said control instruction (C1) being used to control the electric compressor (26).

2. Production method according to the preceding claim, wherein a second additional parameter relates to the air pressure downstream of the electric compressor (26).

3. Production method according to one of the preceding claims, wherein a second additional parameter relates to the air flow ($Q_{20}$) through the electric compressor (26).

4. Production method according to one of the preceding claims, wherein a second additional parameter relates to the rotational speed ($\omega_{26}$) of the electric compressor (26).

5. Production method according to one of the preceding claims, wherein a second additional parameter relates to the operating time ($\Delta t$) of the electric compressor (26).

6. Production method according to one of claims 1 to 5, wherein, in the determining step, the control instruction ($C_1$) is chosen to be equal to the preliminary instruction ($C_0$) if each second parameter (SOC, $T_{int}$, $R_P$, $Q_{20}$, $\omega_{26}$) is within the range of functional values, and if not is chosen to be equal to zero.

7. Production method according to one of claims 1 to 5, wherein, in the determining step, the control instruction ($C_1$) is chosen to be equal to the preliminary instruction ($C_0$) if each second parameter (SOC, $T_{int}$, $R_P$, $Q_{20}$, $\omega_{26}$) is within the range of functional values, and if not is chosen to be equal to a value which is a function of the preliminary instruction ($C_0$) and which is strictly less than the preliminary instruction ($C_0$).

8. Power train (1) for a motor vehicle, comprising an internal combustion engine (2) which includes:

   - an engine block (10) which delimits cylinders (11) and which is fitted with a crankshaft,
   - an intake line (20) for admitting fresh air into the cylinders (11),
   - an exhaust line (80) for burnt gases to leave the cylinders (11), which includes at least one burnt gas treatment means (83),

- a turbocharger which includes a turbine (82) which is mounted in the exhaust line (80) and a main compressor (22) which is mounted in the intake line (20), and
- an electric compressor (26) which comprises an impeller (26A) which is mounted in the intake line (20) and an electric motor (26B), for actuating the impeller (26A), powered by a storage battery (50),

**characterized in that** it further comprises a computer (100) which is suitable for implementing a method for producing a control instruction ($C_1$) for the electric compressor (26) in accordance with one of the preceding claims, and for controlling the electric motor (26B) of the electric compressor (26) according to this control instruction ($C_1$).

9. Power train (1) according to the preceding claim, further comprising an electric machine (90) which is coupled to the crankshaft of the internal combustion engine (2) and which is connected to the storage battery (50).

Fig.1

Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102006000075